(19) **Europäisches Patentamt / European Patent Office / Office européen des brevets**

(11) **EP 4 170 759 A1**

(12) # EUROPEAN PATENT APPLICATION
published in accordance with Art. 153(4) EPC

(43) Date of publication:
**26.04.2023 Bulletin 2023/17**

(21) Application number: **21828794.4**

(22) Date of filing: **23.06.2021**

(51) International Patent Classification (IPC):
*H01M 4/86* (2006.01)     *H01M 4/88* (2006.01)
*H01M 4/90* (2006.01)     *H01M 8/10* (2016.01)

(52) Cooperative Patent Classification (CPC):
**H01M 4/86; H01M 4/88; H01M 4/90; H01M 8/10;**
Y02E 60/50; Y02P 70/50

(86) International application number:
**PCT/JP2021/023842**

(87) International publication number:
**WO 2021/261531 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2020 JP 2020108221**

(71) Applicants:
• **HIROSAKI UNIVERSITY**
 **Hirosaki-shi, Aomori 036-8560 (JP)**
• **TOPPAN INC.**
 **Tokyo 110-0016 (JP)**

(72) Inventors:
• **CHISAKA, Mitsuharu**
 **Hirosaki-shi, Aomori 036-8560 (JP)**
• **SUZUKI, Yutaka**
 **Tokyo 110-0016 (JP)**
• **MORIOKA, Hiroyuki**
 **Tokyo 110-0016 (JP)**
• **OZAWA, Madoka**
 **Tokyo 110-0016 (JP)**

(74) Representative: **TBK**
**Bavariaring 4-6**
**80336 München (DE)**

(54) **CATALYST FOR FUEL CELLS, ELECTRODE CATALYST LAYER, MEMBRANE ELECTRODE JOINED BODY, SOLID POLYMER TYPE FUEL CELL, METHOD FOR PRODUCING TITANIUM OXIDE FOR CATALYST CARRIERS, AND METHOD FOR PRODUCING CATALYST FOR FUEL CELLS**

(57)    The present invention provides a fibrous rutile-type oxide that contains an oxygen atom, a nitrogen atom, and a transition metal atom. The transition metal atom is at least one atom selected from the group consisting of a titanium atom, a tantalum atom, a niobium atom, and a zirconium atom. The rutile-type oxide is represented by the chemical formula $MO_xN_y$, where M represents the transition metal atom. In the chemical formula, x satisfies $x = 2 - (y + j)$ $(j \geq 0)$.

Fig.4

EP 4 170 759 A1

**Description**

TECHNICAL FIELD

The present disclosure relates to a catalyst for fuel cells, an electrode catalyst layer, a membrane electrode assembly, a polymer electrolyte fuel cell, a method for producing titanium oxide for catalyst carriers, and a method for producing catalyst for fuel cells.

BACKGROUND ART

Fuel cells are classified into alkaline type, phosphoric acid type, solid polymer type, molten carbonate type, solid oxide type, and the like, according to the type of the electrolyte. Polymer electrolyte fuel cells (PEFCs) can operate at low temperatures and have high power densities. In addition, polymer electrolyte fuel cells can be reduced in size and weight, and thus polymer electrolyte fuel cells are expected to be applied as portable power sources, household power sources, and vehicle-mounted power sources.

A polymer electrolyte fuel cell includes a polymer electrolyte membrane, a fuel electrode (anode), and an air electrode (cathode). The polymer electrolyte membrane is sandwiched between the fuel electrode and the air electrode in the thickness direction of the polymer electrolyte membrane. A fuel gas including hydrogen is supplied to the fuel electrode, and an oxidant gas including oxygen is supplied to the air electrode, whereby the polymer electrolyte fuel cell generates power through the following electrochemical reactions. Of the following chemical formulas, the formula (1) represents the reaction that occurs at the anode, whereas the formula (2) represents the reaction that occurs at the cathode.

$$H_2 \rightarrow 2H^+ + 2e^- \qquad \text{formula (1)}$$

$$1/2O_2 + 2H^+ + 2e^- \rightarrow H_2O \qquad \text{formula (2)}$$

Each of the anode and cathode has a structure in which an electrode catalyst layer and a gas diffusion layer are stacked together. The electrode catalyst layer of the anode generates protons and electrons from the fuel gas supplied to the electrode catalyst layer (formula (1)). The protons pass through the polymer electrolyte included in the electrode catalyst layer of the anode and the polymer electrolyte membrane, to thereby move to the cathode. The electrons pass through an external circuit to thereby move to the cathode. In the electrode catalyst layer of the cathode, water is generated by the reaction of protons, electrons, and an oxidant gas supplied from the outside (formula (2)).

The catalyst included in the electrode catalyst layer of the anode and the catalyst included in the electrode catalyst layer of the cathode promote the oxidation-reduction reactions shown in the formula (1) and formula (2). A membrane electrode assembly having an electrode catalyst layer including a catalyst with high catalytic activity for oxidation-reduction reactions exhibits high power generation characteristics. For example, a catalyst including platinum is used as a catalyst with high catalytic activity (refer to, for example, Patent Literature 1).

CITATION LIST

Patent Literature

Patent Literature 1: Japanese Laid-Open Patent Publication No. 2016-219179

SUMMARY OF INVENTION

Technical Problem

Platinum is both a rare metal and an expensive metal. Therefore, for catalysts for fuel cells, there is a need for catalysts having a catalytic activity despite having a composition with a reduced platinum content.

An objective of the present disclosure is to provide a catalyst for fuel cells capable of having a catalytic activity despite having a composition with a reduced platinum content, an electrode catalyst layer, a membrane electrode assembly, a polymer electrolyte fuel cell, a method for producing titanium oxide for catalyst carriers, and a method for producing a catalyst for fuel cells.

Solution to Problem

In one aspect, a catalyst for fuel cells is provided. The catalyst includes a fibrous rutile-type oxide including an oxygen atom, a nitrogen atom, and a transition metal atom. The transition metal atom is at least one selected from the group consisting of a titanium atom, a tantalum atom, a niobium atom, and a zirconium atom. The fibrous rutile-type oxide is represented by a chemical formula $MO_xN_y$, where the transition metal atom is represented by M, and x in the chemical formula satisfies the following:

$$x = 2 - (y + j) \ (j \geq 0).$$

In another aspect, a catalyst for fuel cells is provided. The catalyst includes a fibrous rutile-type oxide including an oxygen atom, a nitrogen atom, a pentavalent phosphorus atom, and a transition metal atom. The transition metal atom is at least one selected from the group consisting of a titanium atom, a tantalum atom, a niobium atom, and a zirconium atom. The fibrous rutile-type oxide is represented by a chemical formula $M_wO_xN_yP_z$, where the transition metal atom is represented by M, and w and x in the chemical formula satisfy the following:

$$w = 1 - (z + i) \ (i \geq 0)$$

$$x = 2 - (y + j) \ (j \geq 0).$$

In another aspect, an electrode catalyst layer is provided that is configured to be joined to a polymer electrolyte layer in a polymer electrolyte fuel cell. The electrode catalyst layer includes the above described catalyst for fuel cells and a polymer electrolyte.
In another aspect, a membrane electrode assembly is provided that includes a polymer electrolyte membrane and the above-described electrode catalyst layer. The electrode catalyst layer is joined to the polymer electrolyte membrane.
In another aspect, a polymer electrolyte fuel cell is provided that includes the above-described membrane electrode assembly.
In another aspect, a method for producing a titanium oxide for catalyst carriers is provided. The method includes: mixing a titanium oxide and two or more salts to prepare a mixture; and heating the mixture at a temperature higher than a eutectic point of the two or more salts to provide a fibrous rutile-type titanium oxide.
In another aspect, a method for producing a catalyst for fuel cells is provided. The method includes: obtaining a fibrous rutile-type titanium oxide by the above-described method for producing a titanium oxide for catalyst carriers; mixing the rutile-type titanium oxide, titanium oxysulfate, and urea to prepare a dispersion liquid; heating the dispersion liquid; drying the heated dispersion liquid to prepare a powder; and thermally decomposing the prepared powder to provide a $TiO_xN_y$ catalyst, where x in the chemical formula $TiO_xN_y$ satisfies the following:

$$x = 2 - (y + j) \ (j \geq 0).$$

In another aspect, a method for producing a catalyst for fuel cells is provided. The method includes: obtaining a fibrous rutile-type titanium oxide by the above-described method for producing a titanium oxide for catalyst carriers; mixing the rutile-type titanium oxide, titanium oxysulfate, urea, and phosphoric acid to prepare a dispersion liquid; heating the dispersion liquid; drying the heated dispersion liquid to prepare a powder; and thermally decomposing the prepared powder to provide a $Ti_wO_xN_yP_z$ catalyst, where w and x in the chemical formula $Ti_wO_xN_yP_z$ satisfy the following:

$$w = 1 - (z + i) \ (i \geq 0)$$

$$x = 2 - (y + j) \ (j \geq 0).$$

BRIEF DESCRIPTION OF DRAWINGS

Fig. 1 is a cross-sectional view of the structure of a membrane electrode assembly according to one embodiment.

Fig. 2 is a schematic view of the structure of an electrode catalyst layer included in the membrane electrode assembly shown in Fig. 1.

Fig. 3 is an exploded perspective view of the structure of a polymer electrolyte fuel cell including the membrane electrode assembly shown in Fig. 1.

Fig. 4 shows X-ray diffraction patterns of titanium oxide for catalyst carriers in Example 1 and Comparative Example 1.

Fig. 5 shows a SEM image of titanium oxide for catalyst carriers in Example 1.

Fig. 6 shows a SEM image of titanium oxide for catalyst carriers in Example 2.

Fig. 7 shows a SEM image of titanium oxide for catalyst carriers in Example 3.

Fig. 8 shows a SEM image of titanium oxide for catalyst carriers in Example 4.

Fig. 9 shows the convection voltammogram in Examples.

DESCRIPTION OF EMBODIMENTS

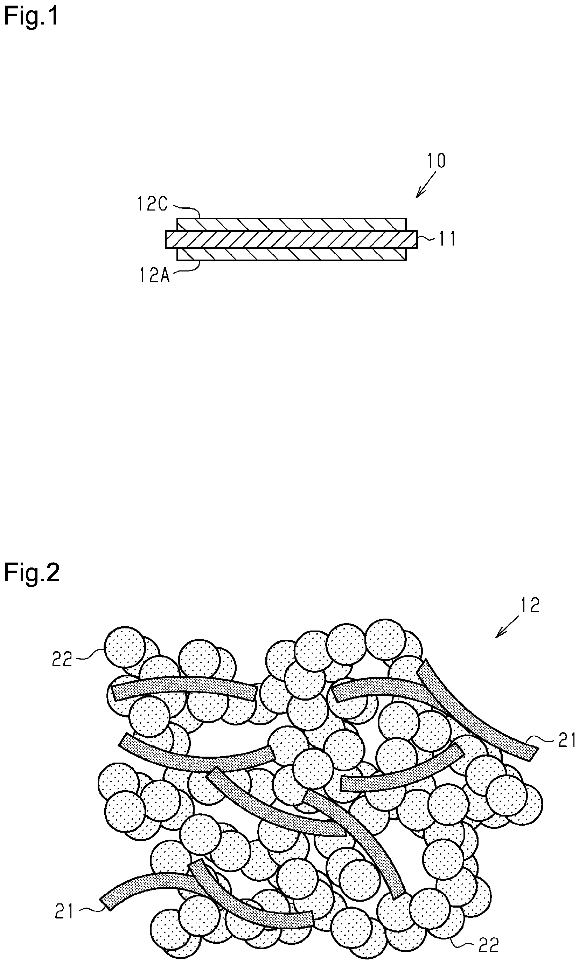

An embodiment of a catalyst for fuel cells, an electrode catalyst layer, a membrane electrode assembly, a polymer electrolyte fuel cell, a method for producing titanium oxide for catalyst carriers, and a method for producing a catalyst for fuel cells will be described with reference to Figs. 1 to 9.

[Membrane Electrode Assembly]

The structure of the membrane electrode assembly will be described with reference to Fig. 1. Fig. 1 shows the structure of a cross section along the thickness direction of the membrane electrode assembly.

As shown in Fig. 1, a membrane electrode assembly 10 includes a polymer electrolyte membrane 11, a cathode-side electrode catalyst layer 12C, and an anode-side electrode catalyst layer 12A. The polymer electrolyte membrane 11 is a solid polymer electrolyte membrane. Opposite surfaces of the polymer electrolyte membrane 11 includes a first surface and a second surface. The cathode-side electrode catalyst layer 12C is joined to the first surface, and the anode-side electrode catalyst layer 12A is joined to the second surface. The cathode-side electrode catalyst layer 12C is an electrode catalyst layer that serves as an air electrode (cathode), and the anode-side electrode catalyst layer 12A is an electrode catalyst layer that serves as a fuel electrode (anode). The outer peripheral portion of the cathode-side electrode catalyst layer 12C and the outer peripheral portion of the anode-side electrode catalyst layer 12A may be sealed with a gasket or the like.

[Electrode Catalyst Layer]

The electrode catalyst layer will be described in more detail with reference to Fig. 2. The electrode catalyst layers described below are applied to both the cathode-side electrode catalyst layer 12C and the anode-side electrode catalyst layer 12A. The electrode catalyst layer described below may be applied to only one of the cathode-side electrode catalyst layer 12C and the anode-side electrode catalyst layer 12A.

As shown in Fig. 2, the electrode catalyst layer 12 includes a fibrous catalyst 21 and a polymer electrolyte 22. The fibrous catalyst 21 is an example of a catalyst for fuel cells.

The thickness of the electrode catalyst layer 12 is preferably 5 $\mu$m or more and 30 $\mu$m or less, more preferably 10 $\mu$m or more and 20 $\mu$m or less. The electrode catalyst layer 12 having a thickness of 5 $\mu$m or more hardly causes flooding, thereby suppressing a decrease in output. The electrode catalyst layer 12 having a thickness of 30 $\mu$m or less suppresses an increase in resistance of the electrode catalyst layer 12, and as a result, a decrease in output is suppressed.

The density of the electrode catalyst layer 12 is preferably 1000 mg/cm$^3$ or more and 5000 mg/cm$^3$ or less, more preferably 1500 mg/cm$^3$ or more and 4000 mg/cm$^3$ or less. The density of the electrode catalyst layer 12 is the ratio of the mass (M) of the nonvolatile component to the volume (V) of the electrode catalyst layer 12, expressed as M/V. The volume (V) of the electrode catalyst layer 12 can be calculated from the product of the thickness of the electrode catalyst layer and the electrode area.

If the density of the electrode catalyst layer 12 is less than 1000 mg/cm$^3$, the structure of the electrode catalyst layer 12 easily breaks, resulting in low durability of the electrode catalyst layer 12. If the density of the electrode catalyst layer 12 is more than 5000 mg/cm$^3$, the drainage and gas diffusion properties of the electrode catalyst layer 12 are poor, and the electrode catalyst layer 12 lacks the flexibility. Therefore, the density of the electrode catalyst layer 12 is 1000 mg/cm$^3$ or more, whereby the structure of the electrode catalyst layer 12 hardly breaks, and thus the electrode catalyst layer 12 has enhanced durability. In addition, the density of the electrode catalyst layer 12 is 5000 mg/cm$^3$ or less, whereby the reduction in the drainage and gas diffusion properties of the electrode catalyst layer 12 is suppressed, and the reduction in the flexibility of the electrode catalyst layer 12 is suppressed.

A fibrous catalyst 21 is a fibrous rutile-type oxide including oxygen atoms, nitrogen atoms, and transition metal atoms. The transition metal atom is at least one selected from the group consisting of titanium atoms, tantalum atoms, niobium atoms, and zirconium atoms. When the transition metal atom is represented by M, the fibrous catalyst 21 is represented by the chemical formula $MO_xN_y$. The x in the chemical formula satisfies the following:

$$x = 2 - (y + j) \ (j \geq 0)$$

In the fibrous catalyst 21, a part of the oxygen atoms in the rutile-type metal oxide is replaced with nitrogen atoms. In the metal oxide, a part of the oxygen atoms is removed to eliminate the charge imbalance caused by the replacement for oxygen atoms with nitrogen atoms. Therefore, the number of oxygen atoms in the fibrous catalyst 21 is represented by the above formula.

In the fibrous catalyst 21, the catalyst has a fibrous shape, and therefore the mechanical strength of the electrode catalyst layer 12 having the fibrous catalyst 21 is enhanced, thereby enhancing the durability of the electrode catalyst layer 12. For example, the occurrence of cracks in the electrode catalyst layer 12 is suppressed. Therefore, it is possible to improve the durability of the polymer electrolyte fuel cell including the electrode catalyst layer 12. In addition, as compared with the case where the catalyst for fuel cells has a particulate form, an interface that acts as a resistance to electron conduction hardly generates in the path of electrons generated in the electrode catalyst layer 12. Therefore, it is possible to reduce the resistance in the polymer electrolyte fuel cell including the electrode catalyst layer 12. As a result, it is possible to improve the performance of the polymer electrolyte fuel cell.

The electrode catalyst layer 12 can include a fibrous material made of a material without catalytic activity. In this case, the mechanical strength of the electrode catalyst layer 12 can be increased by the fibrous material. However, when the electrode catalyst layer 12 includes a fibrous material, the distance between catalysts is increased in the electrode catalyst layer 12, as compared with the case where no fibrous material is included. As a result, the performance of the polymer electrolyte fuel cell having the electrode catalyst layer 12 may be degraded due to the large distance between the catalysts. In this respect, the fibrous catalyst 21 suppresses the impairment of the performance of the polymer electrolyte fuel cell due to the increase of the distance between the catalysts, and improves the durability of the electrode catalyst layer 12.

The fibrous catalyst 21 is preferably a fibrous rutile-type oxide further including pentavalent phosphorus atoms. When the transition metal atom is represented by M, the fibrous catalyst 21 is represented by the chemical formula $M_wO_xN_yP_z$. The w and x in the chemical formula satisfy the following:

$$w = 1 - (z + i) \ (i \geq 0)$$

$$x = 2 - (y + j) \ (j \geq 0)$$

In the fibrous catalyst 21, a part of the transition metal atoms in the rutile-type metal oxide ($MO_2$) is replaced with phosphorus atoms. In the metal oxide, a part of the transition metal atoms is missing to eliminate the charge imbalance caused by the replacement for the transition metal atoms with the phosphorus atoms.

Since a pentavalent phosphorus atom is included in the fibrous catalyst 21, at least one of the pentavalent phosphorus atom, itself doped in the rutile-type metal oxide, and the metal deficiency, formed by doping the pentavalent phosphorus atom and compensating for the charge imbalance, may form new active sites for the oxygen reduction reaction, and as a result, the catalytic activity of the fibrous catalyst 21 is enhanced.

The transition metal atom is preferably a titanium atom.

In the fibrous catalyst 21, the ratio of the number of phosphorus atoms ($N^P$) to the number of titanium atoms ($N_{Ti}$), expressed as $N_P/N_{Ti}$, is preferably 0.1 or more and 2.0 or less. That is, $Ti_wO_xN_yP_z$ preferably satisfies the following formula:

$$0.1 \leq z \leq 2.0$$

As a result, it is possible to enhance the catalytic activity for the oxygen reduction reaction.

In addition, in the fibrous catalyst 21, the ratio of the number of nitrogen atoms ($N_N$) to the number of titanium atoms ($N_{Ti}$), expressed as $N_N/N_{Ti}$, is preferably 1.0 or more and 1.5 or less. That is, $Ti_wO_xN_yP_z$ preferably satisfies the following formula:

$$1.0 \le y \le 1.5$$

As a result, it is possible to enhance the catalytic activity for the oxygen reduction reaction.

The fibrous catalyst 21 includes a core portion and a surface layer portion covering the core portion. The core portion includes a titanium nitride (TiN) lattice. The surface layer portion includes a titanium dioxide ($TiO_2$) lattice. In addition, both the core portion and the surface layer portion include pentavalent phosphorus atoms. As a result, it is possible to enhance the catalytic activity for the oxygen reduction reaction.

The length of the fibrous catalyst 21 is preferably 500 nm or more and 10 $\mu$m or less. When the length of the fibrous catalyst 21 is in this range, cracks are hardly generated in the electrode catalyst layer 12. As a result, the durability of the electrode catalyst layer 12 is enhanced. When the length of the fibrous catalysts 21 is 500 nm or more, the fibrous catalysts 21 are easily entangled with each other, and the occurrence of cracks in the electrode catalyst layer 12 is suppressed. When the length of the fibrous catalyst 21 is 10 $\mu$m or less, an ink for the catalyst layer can be produced and thus the electrode catalyst layer 12 can be formed.

The aspect ratio of the fibrous catalyst 21 is preferably 10 or more and 1000 or less. The aspect ratio is the ratio of the length (L) of the fibrous catalyst 21 to the diameter (D) of the fibrous catalyst 21, expressed as L/D. When the aspect ratio of the fibrous catalyst 21 is in this range, the membrane electrode assembly 10 can have good power generation characteristics.

When the aspect ratio is 10 or more, the electrode catalyst layer 12 can have a density that enables good power generation performance in a region of high density of current flowing through the electrode catalyst layer 12. When the aspect ratio is 1000 or less, an ink for the catalyst layer can be produced, and as a result, the electrode catalyst layer 12 can be formed.

The volume resistivity of the fibrous catalyst 21 is preferably 10 $\Omega$cm or less. When the volume resistivity of the fibrous catalyst 21 is 10 $\Omega$cm or less, the electron conduction in the electrode catalyst layer 12 is enhanced and the ohmic resistance is lowered. As a result, the power generation characteristics of the membrane electrode assembly 10 are improved.

[Polymer Electrolyte Fuel Cell]

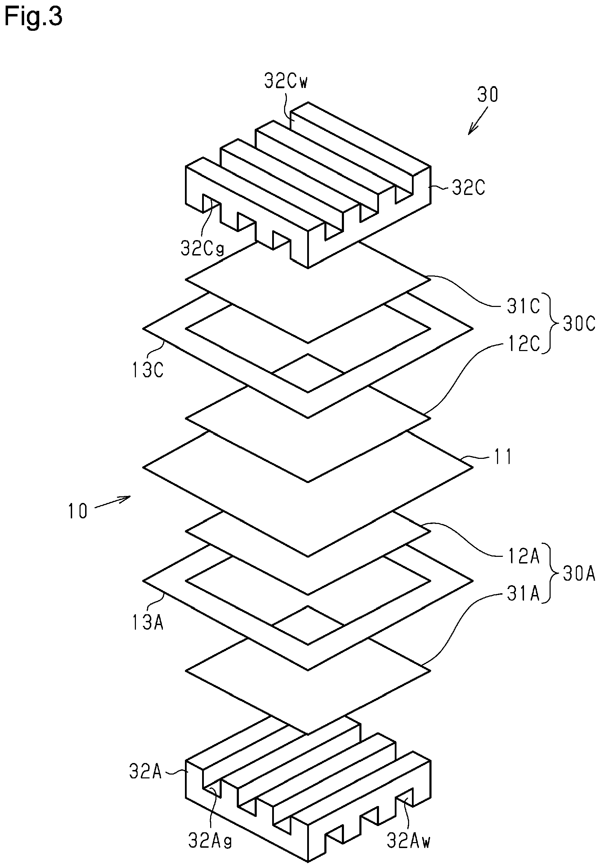

The structure of a polymer electrolyte fuel cell including a membrane electrode assembly will be described with reference to Fig. 3. The structure described below is an example of the structure of a polymer electrolyte fuel cell. Fig. 3 shows the structure of a single cell provided in the polymer electrolyte fuel cell. The polymer electrolyte fuel cell may have a structure in which a plurality of single cells are provided and stacked together.

As shown in Fig. 3, a polymer electrolyte fuel cell 30 includes a membrane electrode assembly 10, two gas diffusion layers, and two separators. The two gas diffusion layers consist of a cathode-side gas diffusion layer 31C and an anode-side gas diffusion layer 31A. The two separators consist of a cathode-side separator 32C and an anode-side separator 32A.

The cathode-side gas diffusion layer 31C is in contact with the cathode-side electrode catalyst layer 12C. The cathode-side electrode catalyst layer 12C and the cathode-side gas diffusion layer 31C compose an air electrode (cathode) 30C. The anode-side gas diffusion layer 31A is in contact with the anode-side electrode catalyst layer 12A. The anode-side electrode catalyst layer 12A and the anode-side gas diffusion layer 31A compose a fuel electrode (anode) 30A.

In a polymer electrolyte membrane 11, the surface to which the cathode-side electrode catalyst layer 12C is joined is the cathode surface, and the surface to which the anode-side electrode catalyst layer 12A is joined is the anode surface. The portion of the cathode surface that is not covered with the cathode-side electrode catalyst layer 12C is the outer peripheral portion. A cathode-side gasket 13C is positioned on the outer peripheral portion. The portion of the anode surface that is not covered with the anode-side electrode catalyst layer 12A is the outer peripheral portion. An anode-side gasket 13A is positioned on the outer peripheral portion. The cathode-side gasket 13C and the anode-side gasket 13A prevent gas from leaking from the outer peripheral portion of each surface.

The cathode-side separator 32C and the anode-side separator 32A sandwich a multilayer body composed of the membrane electrode assembly 10 and two gas diffusion layers 31C and 31A in the thickness direction of the polymer electrolyte fuel cell 30. The cathode-side separator 32C faces the cathode-side gas diffusion layer 31C. The anode-side separator 32A faces the anode-side gas diffusion layer 31A.

Opposite surfaces of the cathode-side separator 32C each have a plurality of grooves. The groove on the surface facing the cathode-side gas diffusion layer 31C is a gas flow channel 32Cg. The groove on the surface opposite to the facing surface is a cooling water flow channel 32Cw. Opposite surfaces of the anode-side separator 32A each have a plurality of grooves. The groove on the surface facing the anode-side gas diffusion layer 31A is a gas flow channel 32Ag. The groove on the surface opposite to the facing surface is a cooling water flow channel 32Aw. Each of the separators 32C and 32A is formed of a material that is electrically conductive and has low gas permeability.

In the polymer electrolyte fuel cell 30, an oxidant gas is supplied to an air electrode 30C through the gas flow channel 32Cg of the cathode-side separator 32C. A fuel gas is supplied to the fuel electrode 30A through the gas flow channel 32Ag of the anode-side separator 32A. As a result, the polymer electrolyte fuel cell 30 generates electric power. Air and oxygen gas, for example, can be used as the oxidant gas. Hydrogen gas, for example, can be used as the fuel gas.

[Method for Producing Titanium Oxide for Catalyst Carriers]

A method for producing titanium oxide for catalyst carriers includes: mixing titanium oxide with two or more salts; and heating the mixture of titanium oxide and the salt at a temperature higher than the eutectic point of the salt to provide fibrous rutile-type titanium oxide.

When producing rutile-type titanium oxide, a salt including sodium atoms and a salt including phosphorus atoms are preferably used. That is, when two salts are used in the production of titanium oxide for catalyst carriers, a salt including sodium atoms and a salt including phosphorus atoms are preferably used. For example, sodium chloride (NaCl) and sodium hexametaphosphate (($NaPO_3)_6$) are preferably used. The eutectic point when sodium chloride and sodium hexametaphosphate are mixed at a mass ratio of 8:1 is approximately 785°C. That is, the eutectic point is approximately 785°C when the ratio of the mass of sodium hexametaphosphate to the mass of sodium chloride is 1/8.

[Method for Producing Catalyst for Fuel Cells]

The method for producing the fibrous catalyst 21 includes: obtaining fibrous rutile-type titanium oxide; mixing rutile-type titanium oxide, titanium oxysulfate, and urea to prepare a dispersion liquid; heating the dispersion liquid; drying the heated dispersion liquid to prepare a powder; and thermally decomposing the prepared powder to provide a $TiO_xN_y$ catalyst. The x in the chemical formula $TiO_xN_y$ satisfies the following:

$$x = 2 - (y + j) \ (j \geq 0)$$

In the method for producing the fibrous catalyst 21, the preparation of the dispersion liquid may be mixing rutile-type titanium oxide, titanium oxysulfate, urea, and phosphoric acid to prepare the dispersion liquid. In this case, a $Ti_wO_xN_yP_z$ catalyst is obtained by thermally decomposing the prepared powder. Also, w and x in the chemical formula $Ti_wO_xN_yP_z$ satisfy the following:

$$w = 1 - (z + i) \ (i \geq 0)$$

$$x = 2 - (y + j) \ (j \geq 0).$$

In producing the fibrous catalyst 21, the ratio of the number of phosphorus atoms to the number of titanium atoms used in producing the fibrous catalyst 21 is the phosphorus/titanium ratio ($R_p$). That is, the ratio of the number of phosphorus atoms derived from phosphoric acid to the number of titanium atoms derived from titanium oxysulfate is the phosphorus/titanium ratio ($R_p$). The phosphorus/titanium ratio ($R_p$) is preferably 0.2 or more and 0.5 or less, whereby there is obtained a $Ti_wO_xN_yP_z$ catalyst with enhanced catalytic activity for the oxygen reduction reaction.

In the step of preparing the dispersion liquid, titanium (IV) oxysulfate powder and phosphoric acid may be mixed for several hours. In the step of heating the dispersion liquid, the dispersion liquid may be heated while being stirred. In the step of thermally decomposing the powder prepared in the powder preparing step, the powder can be thermally decomposed in an environment to which nitrogen gas is supplied. In the thermal decomposition step, the temperature for thermally decomposing the powder is preferably a temperature higher than 973 K (700°C), and, for example, can be 1123 K (850°C). In the thermal decomposition step, the period for thermally decomposing the powder can be, for example, several hours.

After the thermal decomposition step, a post-annealing step may be performed. In the post-annealing step, the $Ti_wO_xN_yP_z$ catalyst obtained in the thermal decomposition step is heated in an environment to which ammonia ($NH_3$) gas is supplied. In the post-annealing step, the temperature for heating the $Ti_wO_xN_yP_z$ catalyst can be, for example, 923 K (650°C).

[Material for Forming Membrane Electrode Assembly]

A polymer electrolyte membrane 11 is formed of, for example, a polymer having proton conductivity. The polymer having proton conductivity may be, for example, a fluorine-based resin and a hydrocarbon-based resin. The fluorine-based resin may be, for example, NAFION (manufactured by DuPont Co., Ltd., registered trademark), FLEMION (manufactured by Asahi Glass Co., Ltd., registered trademark), and GORE-SELECT (manufactured by W. L. Gore & Associates G.K., registered trademark). The hydrocarbon-based resin may be, for example, an engineering plastic, and a copolymer of an engineering plastic into which a sulfonic acid group is introduced.

The polymer electrolyte 22 may be, for example, a polymeric substance having proton conductivity. A material capable of being used for forming the polymer electrolyte membrane 11 described above can be used for the polymer electrolyte 22.

In the polymer electrolyte 22, the dry mass (equivalent weight: EW) per mole of proton donating groups is preferably in the range of 400 or more and 1200 or less, more preferably in the range of 600 or more and 1000 or less. When the equivalent weight EW is 400 or more, deterioration of power generation performance due to flooding is suppressed, and when the equivalent weight EW is 1200 or less, deterioration of proton conductivity is suppressed, thereby suppressing deterioration of the power generation performance.

In the cathode-side electrode catalyst layer 12C, the ratio of the mass of the polymer electrolyte 22 (MH) to the mass of the fibrous catalyst 21 (MC), expressed as MH/MC, is preferably in the range of 0.3 or more and 4.0 or less, more preferably in the range of 0.4 or more and 2.5 or less. When the ratio is 0.3 or more, the decrease in the diffusion rate of protons is suppressed, thereby suppressing the deterioration of the power generation performance. In addition, when the ratio is 0.3 or more, deterioration of the mechanical properties of the electrode catalyst layer 12 is suppressed. When the ratio is 4.0 or less, the deterioration of the power generation performance due to flooding is suppressed.

[Method for Producing Catalyst Layer]

When producing the electrode catalyst layer 12, first, an ink for a catalyst layer is prepared. Then, the prepared ink for the catalyst layer is applied onto a substrate or a polymer electrolyte membrane 11, and the film formed by the application is dried to produce the electrode catalyst layer 12.

The ink for the catalyst layer includes the fibrous catalyst 21, the polymer electrolyte 22, and a solvent. The solvent may be a liquid that disperses or dissolves the polymer electrolyte 22. The solvent may be, for example, water, alcohols, ketones, ethers, amines, esters, acetic acid, propionic acid, dimethylformamide, dimethylacetamide, N-methylpyrrolidone, glycols, and glycol ethers.

The alcohol may be methanol, ethanol, 1-propanol, 2-propanol, 1-butanol, 2-butanol, isobutyl alcohol, tert-butyl alcohol, and the like. The ketone may be acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, diisobutyl ketone, and the like. The ethers may be tetrahydrofuran, tetrahydropyran, dioxane, diethylene glycol dimethyl ether, anisole, methoxytoluene, diethyl ether, dipropyl ether, dibutyl ether, and the like. The amine may be isopropylamine, butylamine, isobutylamine, cyclohexylamine, diethylamine, aniline, and the like. The esters may be propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, butyl propionate, and the like. The glycols and glycol ethers may be, for example, ethylene glycol, diethylene glycol, propylene glycol, ethylene glycol monomethyl ether, ethylene glycol dimethyl ether, ethylene glycol diethyl ether, diacetone alcohol, 1-methoxy-2-propanol, and 1-ethoxy-2-propanol.

The solids content of the ink for the catalyst layer is preferably in the range of 5% by mass or more and 30% by mass or less, more preferably in the range of 8% by mass or more and 20% by mass or less. When the solids content is 5% by mass or more, the ink for the catalyst layer has a viscosity that enables the suppression of variations in the amount applied. When the solids content is 30% by mass or less, the ink for the catalyst layer has a viscosity that enables the preventing a poor appearance of the electrode catalyst layer formed by applying the ink for the catalyst layer.

The method of applying the ink for the catalyst layer may be, for example, a doctor blade method, a die coating method, a dipping method, a screen printing method, a laminator roll coating method, and a spray method.

The method for drying the ink for the catalyst layer may be, for example, hot air drying, and infrared ray (IR) drying. The drying temperature is preferably in the range of 40°C or more and 200°C or less, more preferably in the range of 40°C or more and 120°C or less. When the drying temperature is 40°C or more, the solvent is prevented from remaining. When the drying temperature is 200°C or less, ignition of the ink for the catalyst layer is suppressed. The drying time of the ink for the catalyst layer is preferably in the range of 0.5 minutes to 1 hour, more preferably in the range of 1 minute to 30 minutes. When the drying time is 0.5 minutes or more, the solvent is prevented from remaining. When the drying time is one hour or less, deformation of the polymer electrolyte membrane 11 due to drying of the polymer electrolyte membrane 11 is suppressed.

Alternatively, the catalyst ink for forming the electrode catalyst layer 12 may be prepared by the following method. Specifically, when preparing the catalyst ink, a first catalyst ink is prepared first, and then a second catalyst ink is prepared. The first catalyst ink includes a catalyst, a first polymer electrolyte, and a first solvent. The second catalyst ink includes a coated catalyst formed from the first catalyst ink, a second polymer electrolyte, and a second solvent.

After the first catalyst ink is prepared, the first catalyst ink is dried to prepare the coated catalyst, which is the catalyst coated with the first polymer electrolyte. Then, the second catalyst ink is prepared by using the coated catalyst thus prepared.

When preparing the second catalyst ink, the coated catalyst can be heated before mixing the coated catalyst with the second solvent. When heating the coated catalyst, the coated catalyst is preferably heated at a temperature in the range of 50°C or more and 180°C or less, whereby the second catalyst ink is prepared without dissolving the first polymer electrolyte of the coated catalyst in the solvent and without inhibiting proton conductivity.

A polymer electrolyte having proton conductivity can be used for the first polymer electrolyte and the second polymer electrolyte. In order to improve the adhesion between electrode catalyst layers 12A and 12C and the polymer electrolyte membrane 11, the first polymer electrolyte and the second polymer electrolyte are preferably the same electrolyte as the polymer electrolyte membrane 11 or a similar electrolyte thereof. For example, a fluorine-based resin and a hydrocarbon-based resin can be used for the first polymer electrolyte and the second polymer electrolyte. For example, NAFION (registered trademark) (manufactured by DuPont Co., Ltd.) can be used as the fluororesin. Examples of the hydrocarbon-based resin that can be used include sulfonated polyether ketone, sulfonated polyether sulfone, sulfonated polysulfide, and sulfonated polyphenylene.

For example, a liquid capable of dispersing the polymer electrolyte or a liquid capable of dissolving the polymer electrolyte is preferably used for the first solvent and the second solvent. Water, alcohols, ketones, ethers, sulfoxides, amides, and the like can be used as the solvent. The alcohols may be methanol, ethanol, 1-propanol, 2-propanol, 1-butanol, 2-butanol, 3-butanol, pentanol, ethylene glycol, diacetone alcohol, 1-methoxy-2-propanol, and the like. The ketones may be acetone, methyl ethyl ketone, pentanone, methyl isobutyl ketone, diisobutyl ketone, and the like. The ethers may be dioxane, tetrahydrofuran, and the like. The sulfoxides may be dimethylsulfoxide and the like. The amides may be dimethylformamide, dimethylacetamide, and the like. The solvents described above may be used singly, or a plurality of the solvents may be used in combination, for the first solvent and the second solvent. The first solvent and the second solvent are preferably solvents that can be easily removed by heating.

When preparing the first catalyst ink and when preparing the second catalyst ink, the solvent including the catalyst and the like may be subjected to dispersing treatment. For example, a ball mill, bead mill, roll mill, shearing mill, wet mill, ultrasonic disperser, and homogenizer can be used for the dispersing treatment.

For example, a roll coater, an air knife coater, a blade coater, a rod coater, a reverse coater, a bar coater, a comma coater, a die coater, a gravure coater, a screen coater, a sprayer, and a spinner can be used for applying the second catalyst ink.

The method for drying the first catalyst ink and the method for drying the second catalyst ink may be hot air drying, IR drying, and the like. When drying the first catalyst ink and the second catalyst ink, any one of hot air drying and IR drying may be used, or both may be used. When drying the first catalyst ink to prepare the coated catalyst, the first catalyst ink is preferably dried at a temperature within the range of 30°C or more and 140°C or less, whereby in the step of preparing the second catalyst ink, the first polymer electrolyte included in the coated catalyst does not dissolve in the solvent, and a decrease in proton conductivity on the surface of the catalyst is suppressed.

In the coated catalyst, the ratio between the mass of the catalyst (C) to the mass of the first polymer electrolyte (P), expressed as C:P, is preferably within the range of 1:0.01 to 1:30. In other words, the ratio of the mass of the first polymer electrolyte (P) to the mass of the catalyst (C), expressed as P/C, is preferably within the range of 1/30 or more and 100 or less. Due to this, the diffusibility of oxygen and the like in the coated catalyst is not hindered, and the proton conductivity of the catalyst surface is increased, thereby allowing increase in the reaction active sites.

[Method for Producing Membrane Electrode Assembly]

A membrane electrode assembly 10 is produced by, for example, forming electrode catalyst layers 12A and 12C on a transfer substrate or gas diffusion layers 31A and 31C and then thermally compressing the electrode catalyst layers 12A and 12C to a polymer electrolyte membrane 11. Alternatively, the membrane electrode assembly 10 is produced by directly forming the electrode catalyst layers 12A and 12C on the polymer electrolyte membrane 11.

When a transfer substrate is used, the catalyst ink is applied onto the transfer substrate, and then the catalyst ink is dried to form a substrate with an electrode catalyst layer. Then, for example, while the surfaces of the electrode catalyst layers 12A and 12C in the substrate with the electrode catalyst layers are in contact with the polymer electrolyte membrane 11, the electrode catalyst layers 12A and 12C are joined to the polymer electrolyte membrane 11 by heating and pressurizing. By joining the electrode catalyst layers 12A and 12C to both surfaces of the polymer electrolyte membrane 11, the membrane electrode assembly 10 is produced.

The transfer substrate may be any substrate as long as the catalyst ink can be applied onto at least one side thereof and dried by heating, and the electrode catalyst layers 12A and 12C can be transferred to the polymer electrolyte membrane 11. The transfer substrate may include, for example, a polymer film and a heat-resistant fluororesin film. The polymer for forming the polymer film may be, for example, polyethylene terephthalate, polyamide, polyimide, polystyrene, polysulfone, polyethersulfone, polyphenylene sulfide, polyether ether ketone, polyetherimide, polybenzimidazole, polyamideimide, polyacrylate, polyethylene naphthalate, and polyparvanic aramid. The resin for forming the fluororesin film may be polytetrafluoroethylene, polychlorotrifluoroethylene, polyvinylidene fluoride, an ethylene tetrafluoroethylene copolymer, a tetrafluoroethylene-hexafluoropropylene copolymer, a tetrafluoroperfluoroalkyl vinyl ether copolymer, and the like.

The transfer substrate may be a substrate obtained by subjecting the surface of the polymer film or fluororesin film described above to a release treatment, or a substrate integrally formed by coextrusion or the like of the film and release layer described above.

The transfer substrate may have a single layer structure or a multilayer structure. When the transfer substrate has a multilayer structure, the outermost layer may have an opening. The opening is an area from which a portion of the layer has been removed by cutting, punching, or the like. The electrode catalyst layers 12A and 12C with the catalyst ink dried may have a shape corresponding to the opening.

When forming the electrode catalyst layers 12A and 12C directly on the polymer electrolyte membrane 11, for example, the catalyst ink is applied onto the surface of the polymer electrolyte membrane 11 and then the solvent is removed from the catalyst ink to form the electrode catalyst layers 12A and 12C. The forming the electrode catalyst layers 12A and 12C directly on the polymer electrolyte membrane 11 is preferable in view of high adhesion between the polymer electrolyte membrane 11 and the electrode catalyst layers 12A and 12C, and no risk of a crush of the electrode catalyst layers 12A and 12C due to thermal compression.

When a polymer electrolyte fuel cell 30 includes the gaskets 13A and 13C, the gaskets 13A and 13C are arranged in portions of the polymer electrolyte membrane 11 that are not covered with the electrode catalyst layers 12A and 12C. The gaskets 13A and 13C may be any gasket as long as an adhesive is applied or attached onto at least one side thereof, and it can be attached onto the polymer electrolyte membrane 11. The above-described material for forming the transfer substrate can be used for the material forming the gaskets 13A and 13C. The average thickness of one gasket 13A or 13C is preferably 1 $\mu$m or more and 500 $\mu$m or less, more preferably 3 $\mu$m or more and 200 $\mu$m or less, and even more preferably 5 $\mu$m or more and 100 $\mu$m or less.

The average thickness of one polymer electrolyte membrane 11 is preferably 1 $\mu$m or more and 500 $\mu$m or less, more preferably 3 $\mu$m or more and 200 $\mu$m or less, and even more preferably 5 $\mu$m or more and 100 $\mu$m or less.

The above-described production method enhances the proton conductivity on the surface of the catalyst because the catalyst for fuel cells is coated with the first polymer electrolyte.

[Examples]

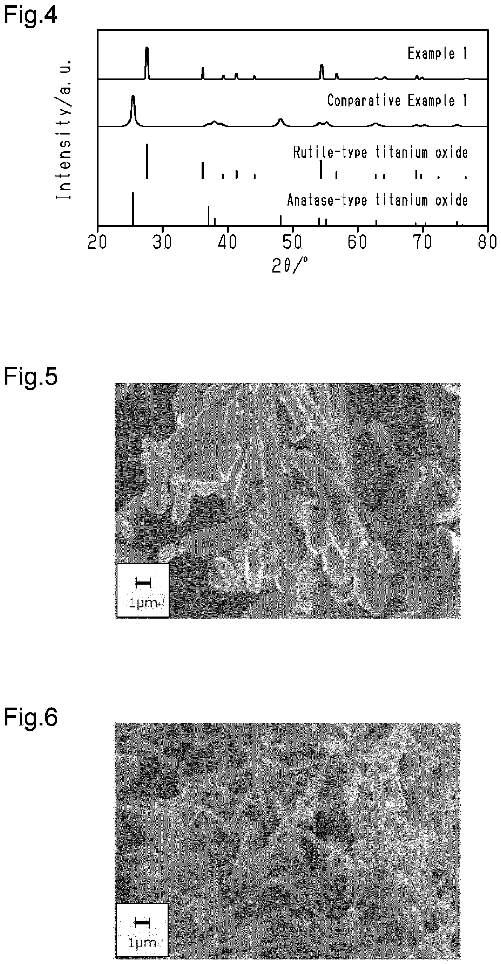

The embodiment will be described with reference to Figs. 4 to 9.

[Titanium Oxide for Catalyst Carriers]

[Example 1]

First, 2 g of titanium oxide ($TiO_2$) (IV) (P25, manufactured by Nippon Aerosil Co., Ltd.), 8 g of sodium chloride (NaCl), and 1 g of sodium hexametaphosphate (($NaPO_3$)$_6$) were mixed using an agate mortar. The obtained mixture was placed in a zirconia crucible, and then the zirconia crucible was sealed with an alumina cap. The zirconia crucible was then heated in an air atmosphere at 900°C for 8 hours using a small muffle furnace. The eutectic point when sodium chloride and sodium hexametaphosphate are mixed at a mass ratio of 8:1 is approximately 785°C.

The zirconia crucible was cooled to room temperature, and then the contents in the zirconia crucible was washed repeatedly with hot water, followed by centrifugation. Thus, a titanium oxide for catalyst carriers in Example 1 was obtained.

[Example 2]

A titanium oxide for catalyst carriers in Example 2 was obtained in the same manner as in Example 1, except that the heating temperature in the air atmosphere in Example 1 was changed to 867°C.

[Example 3]

A titanium oxide for catalyst carriers in Example 3 was obtained in the same manner as in Example 1, except that the heating temperature in the air atmosphere in Example 1 was changed to 825°C.

[Example 4]

A titanium oxide for catalyst carriers in Example 4 was obtained in the same manner as in Example 1, except that 1 g of sodium hexametaphosphate ($(NaPO_3)_6$) in Example 1 was changed to 2 g of disodium hydrogen phosphate ($Na_2HPO_4$). The eutectic point when sodium chloride and disodium hydrogen phosphate are mixed at a mass ratio of 4:1 is approximately 735°C.

[Comparative Example 1]

First, 12 g of titanium (IV) oxysulfate ($TiOSO_4$) was added to a mixture of 45 mL of glycerin ($CH_2(OH)CH(OH)CH_2(OH)$), 90 mL of ethanol ($CH_3CH_2OH$), and 45 mL of diethyl ether ($(CH_3CH_2)_2O$). Then, the mixture was simultaneously subjected to ultrasonic irradiation and stirring, and the resulting suspension was moved to a Teflon (registered trademark) autoclave. The suspension was subjected to solvothermal treatment while stirring at 140°C for 6 hours, and then naturally cooled to provide a powder. The obtained powder was repeatedly subjected to washing with ethanol and centrifugation. An open-ended quartz tube furnace was then used to heat and dry the washed product for 12 hours. Thus, a titanium oxide for catalyst carriers in Comparative Example 1 was obtained.

[Evaluation Method]

[X-ray Diffraction Measurement]

The X-ray diffraction patterns of the titanium oxide for catalyst carriers in Examples 1 to 4 and the titanium oxide for catalyst carriers in Comparative Example 1 were obtained using an X-ray diffractometer (MINIFLEX 600, manufactured by Rigaku Co., Ltd.). At this time, the X-ray diffraction pattern was obtained in the range of 20° to 80°.

[Scanning Electron Microscope Image]

Scanning electron microscope (SEM) images of the titanium oxide for catalyst carriers in Examples 1 to 4 and the titanium oxide for catalyst carriers in Comparative Example 1 were taken under a field emission electron microscope (JSM-7000F, JEOL Ltd.). At this time, the measurement magnification was 5000x.

[Evaluation Result]

The X-ray diffraction patterns of Example 1 and Comparative Example 1 were as shown in Fig. 4.

As shown in Fig. 4, it was found that the titanium oxide for catalyst carriers in Example 1 was rutile-type titanium oxide, and that the titanium oxide for catalyst carriers in Comparative Example 1 was anatase-type titanium oxide. Thus, it was found that a fibrous rutile-type titanium oxide can be obtained by using a molten salt as in the production method in Example 1. The same X-ray diffraction pattern as in Example 1 was obtained for the titanium oxides for catalyst carriers in Examples 2 to 4 as well.

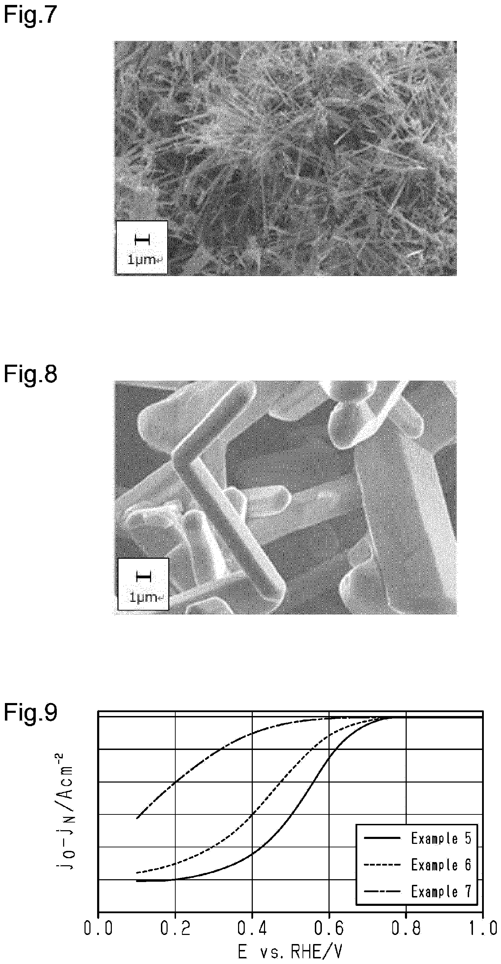

SEM images of the titanium oxide for catalyst carriers in Examples 1 to 4 were as shown in Figs. 5 to 8. Fig. 5 is an SEM image of the titanium oxide for catalyst carriers in Example 1, Fig. 6 is an SEM image of the titanium oxide for catalyst carriers in Example 2, Fig. 7 is an SEM image of the titanium oxide for catalyst carriers in Example 3, and Fig. 8 is an SEM image of the titanium oxide for catalyst carriers in Example 4.

As shown in Figs. 5 to 8, the titanium oxide for catalyst carriers in Examples 1 to 4 was found to have a fibrous shape. In addition, as shown in Figs. 5 to 7, it was found that the aspect ratio of the titanium oxide for catalyst carriers can be improved by lowering the heating temperature of the mixture. In addition, it was found from a comparison between Fig. 5 and Fig. 8 that the use of NaCl and $(NaPO_3)_6$ increased the aspect ratio of the titanium oxide for catalyst carriers as compared with the use of NaCl and $Na_2HPO_4$. Thus, it is found that the aspect ratio of the fibrous titanium oxide can be controlled by selecting the heating temperature when producing the titanium oxide for catalyst carriers and the type of the salt to be mixed with the titanium oxide.

From observation of the titanium oxide for catalyst carriers in Comparative Example 1 with a field emission electron microscope, it was found that the titanium oxide for catalyst carriers in Comparative Example 1 had a fibrous shape.

[Catalyst for Fuel Cells]

[Example 5]

The titanium oxide for catalyst carriers in Example 3, titanium (IV) oxysulfate, urea ($(NH_2)_2CO$), and hydrochloric acid (HCl) were mixed and stirred in distilled water to form a dispersion liquid. At this time, the mass ratio (R) of the titanium oxide for catalyst carriers to the titanium oxide ($TiO_2$) derived from titanium(IV) oxysulfate was set to 1. The ratio of the mass of urea to the mass of titanium oxide derived from titanium oxysulfate was set to 100. The concentration of hydrochloric acid was set to 1.0 mol/dm$^3$. The dispersion liquid was heated at 250°C while stirring and then the dispersion liquid was dried to provide a powder. The powder obtained by drying was heated at 1123 K (850°C) for 2 hours in an environment supplied with nitrogen gas. Thus, a $TiO_xN_y$ catalyst in Example 5 was obtained.

[Example 6]

A $TiO_xN_y$ catalyst in Example 6 was obtained in the same manner as in Example 5, except that the mass ratio R was set to 5.

[Example 7]

A $TiO_xN_y$ catalyst in Example 7 was obtained in the same manner as in Example 5, except that the mass ratio R was set to 20.

[Evaluation Method]

[Convective Voltammetry Measurement]

The activity of the prepared catalyst for fuel cells was evaluated by a rotating disk method, which is one of convective voltammetry. When obtaining the convective voltammogram, the mass fraction of Nation (Nation is a registered trademark) in the electrode catalyst layer was set to 0.05, and the catalyst loading m was kept constant at 0.86 mg/cm$^2$. A three-electrode cell was used for electrochemical measurements at room temperature in 0.1 mol/dm$^3$ sulfuric acid. Convective voltammograms were recorded after continuously bubbling oxygen gas and nitrogen gas for 1800 seconds. At this time, the disk potential (E) relative to the reversible hydrogen electrode (RHE) was set from 0.05 V to 1.2 V, the sweep speed was set at 5 mV/s, and the rotation speed of the rotating disk electrode was set at 1500 rpm. Evaluation was performed using a value obtained by subtracting the current density ($j_N$) of the convective voltammogram measured in the nitrogen gas saturated solution from the current density ($j_O$) of the convective voltammogram measured in the oxygen gas saturated solution.

[Evaluation Result]

The convection voltammograms obtained for the catalyst for fuel cells in Examples 5, 6, and 7 were as shown in Fig. 9.
As shown in Fig. 9, when the mass ratio R was 1, the catalyst for fuel cells was found to have the highest catalytic activity. The conductivity of the catalyst for fuel cells is increased due to the small mass ratio R, and therefore, it is considered that the catalyst for fuel cells with the mass ratio R of 1 has the highest catalytic activity.
As described above, with one embodiment of the catalyst for fuel cells, the electrode catalyst layer, the membrane electrode assembly, the polymer electrolyte fuel cell, the method for producing titanium oxide for catalyst carriers, and the method for producing the catalyst for fuel cells, the following advantages are be obtained.
The fibrous catalyst 21 has catalytic activity for oxidation-reduction reactions, even though it has a composition with a reduced platinum content.

[Production Example]

An example of producing an electrode catalyst layer by using the catalyst for fuel cells ($TiO_xN_y$ catalyst) described above will be described below.

[Production Example 1]

The catalyst for fuel cells in Example 5 and a 20% by mass polymer electrolyte solution (trade name: NAFION (registered trademark), manufactured by DuPont Co., Ltd.) were mixed in a solvent, and dispersing treatment was performed on the solvent including the catalyst for fuel cells and the polymer electrolyte using a planetary ball mill. Thus, the first catalyst ink was obtained. In the first catalyst ink, the ratio between the mass of the catalyst for fuel cells and the mass of the polymer electrolyte was set to 1:0.25. A mixed solution of ultrapure water and 1-propanol was used as the solvent. In the solvent, the ratio between the volume of ultrapure water and the volume of 1-propanol was set to 1:1. In the first catalyst ink, the solids content was set to 15% by mass.

A polytetrafluoroethylene (PTFE) sheet was used as a substrate for drying the first catalyst ink. A doctor blade was used to apply the first catalyst ink onto the PTFE sheet, and the first catalyst ink was dried at 80°C for 5 minutes in an air atmosphere. Then, a coated catalyst, which was a catalyst for fuel cells coated with a polymer electrolyte, was collected from the substrate. Then, the coated catalyst was heat-treated at 70°C.

The heated coated catalyst and a 20% by mass polymer electrolyte solution (trade name: NAFION (registered trademark), manufactured by DuPont Co., Ltd) were mixed in a solvent, and the dispersing treatment was performed on the solvent including the coated catalyst using a planetary ball mill. Thus, the second catalyst ink was obtained. In the second catalyst ink, the ratio between the mass of the catalyst for fuel cells and the mass of the polymer electrolyte was set to 1:0.8. A mixed solution of ultrapure water and 1-propanol was used as the solvent. In the solvent, the ratio between the volume of ultrapure water and the volume of 1-propanol was set to 1:1. In the second catalyst ink, the solids content was set to 15% by mass.

A PTFE sheet was used as a transfer substrate. A doctor blade was used to apply the second catalyst ink onto the PTFE sheet, and the second catalyst ink was dried at 80°C for 5 minutes in an air atmosphere. At this time, the thickness of the electrode catalyst layer was adjusted so that the amount of catalyst supported was 5.0 mg/cm$^2$. Thus, a cathode-side electrode catalyst layer in Production Example 1 was obtained.

[Production example 2]

The same catalyst for fuel cells as in Production Example 1 and a 20% by mass polymer electrolyte solution were mixed in a solvent, and dispersing treatment was performed on a solvent including the catalyst for fuel cells and the polymer electrolyte using a planetary ball mill. A catalyst ink was thus obtained. In the catalyst ink, the ratio between the mass of the catalyst for fuel cells and the mass of the polymer electrolyte was set to 1 :0.8. A mixed solution of ultrapure water and 1-propanol was used as the solvent. In the solvent, the ratio between the volume of ultrapure water and the volume of 1-propanol was set to 1:1. In the catalyst ink, the solids content was set to 15% by mass.

A PTFE sheet was provided as in Production Example 1 as a transfer substrate. A catalyst ink was applied onto the PTFE sheet by the same method as in Production Example 1, and the catalyst ink was dried. At this time, the thickness of the electrode catalyst layer was adjusted so that the amount of the catalyst supported was 5.0 mg/cm$^2$. Thus, a cathode-side electrode catalyst layer in Production Example 2 was obtained.

[Anode-Side Electrode Catalyst Layer]

A platinum catalyst supported on carbon having an amount of platinum supported of 50% by mass and a 20% by mass polymer electrolyte solution were mixed in a solvent, and dispersing treatment was performed on the solvent including a platinum catalyst supported on carbon and the polymer electrolyte using a planetary ball mill. At this time, the dispersing time was set to 60 minutes. Thus, a catalyst ink for the anode-side electrode catalyst layer was obtained. In the catalyst ink, the ratio between the mass of carbon in the platinum supported on carbon and the mass of the polymer electrolyte was set to 1:1. A mixed solution of ultrapure water and 1-propanol was used as the solvent. In the solvent, the ratio between the volume of ultrapure water and the volume of 1-propanol was set to 1:1. In the catalyst ink, the solids content was set to 10% by mass. A catalyst ink was applied onto the transfer substrate by the same method as in Production Example 1, and the catalyst ink was dried. At this time, the thickness of the electrode catalyst layer was adjusted so that the amount of the catalyst supported was 0.1 mg/cm$^2$. Thus, an anode-side electrode catalyst layer was obtained.

**Claims**

1. A catalyst for fuel cells, comprising a fibrous rutile-type oxide including an oxygen atom, a nitrogen atom, and a transition metal atom, wherein

   the transition metal atom is at least one selected from the group consisting of a titanium atom, a tantalum atom, a niobium atom, and a zirconium atom,
   the fibrous rutile-type oxide is represented by a chemical formula $MO_xN_y$, where the transition metal atom is represented by M, and
x in the chemical formula satisfies the following:

$$x = 2 - (y + j) \; (j \geq 0).$$

2.  A catalyst for fuel cells, comprising a fibrous rutile-type oxide including an oxygen atom, a nitrogen atom, a pentavalent phosphorus atom, and a transition metal atom, wherein

    the transition metal atom is at least one selected from the group consisting of a titanium atom, a tantalum atom, a niobium atom, and a zirconium atom,
    the fibrous rutile-type oxide is represented by a chemical formula $M_wO_xN_yP_z$, where the transition metal atom is represented by M, and
    w and x in the chemical formula satisfy the following:

$$w = 1 - (z + i) \; (i \geq 0)$$

$$x = 2 - (y + j) \; (j \geq 0).$$

3.  An electrode catalyst layer configured to be joined to a polymer electrolyte layer in a polymer electrolyte fuel cell, the electrode catalyst layer comprising:

    the catalyst for fuel cells according to claim 1 or 2; and
    a polymer electrolyte.

4.  A membrane electrode assembly, comprising:

    a polymer electrolyte membrane; and
    the electrode catalyst layer according to claim 3, wherein
    the electrode catalyst layer is joined to the polymer electrolyte membrane.

5.  A polymer electrolyte fuel cell, comprising the membrane electrode assembly according to claim 4.

6.  A method for producing a titanium oxide for catalyst carriers, the method comprising:

    mixing a titanium oxide and two or more salts to prepare a mixture; and
    heating the mixture at a temperature higher than a eutectic point of the two or more salts to provide a fibrous rutile-type titanium oxide.

7.  A method for producing a catalyst for fuel cells, the method comprising:

    obtaining a fibrous rutile-type titanium oxide by the method for producing a titanium oxide for catalyst carriers according to claim 6;
    mixing the rutile-type titanium oxide, titanium oxysulfate, and urea to prepare a dispersion liquid;
    heating the dispersion liquid;
    drying the heated dispersion liquid to prepare a powder; and
    thermally decomposing the prepared powder to provide a $TiO_xN_y$ catalyst, wherein
    x in the chemical formula $TiO_xN_y$ satisfies the following:

$$x = 2 - (y + j) \; (j \geq 0).$$

8.  A method for producing a catalyst for fuel cells, the method comprising:

    obtaining a fibrous rutile-type titanium oxide by the method for producing a titanium oxide for catalyst carriers according to claim 6;

mixing the rutile-type titanium oxide, titanium oxysulfate, urea, and phosphoric acid to prepare a dispersion liquid;
heating the dispersion liquid;
drying the heated dispersion liquid to prepare a powder; and
thermally decomposing the prepared powder to provide a $Ti_wO_xN_yP_z$ catalyst, wherein
w and x in the chemical formula $Ti_wO_xN_yP_z$ satisfy the following:

$$w = 1 - (z + i) \ (i \geq 0)$$

$$x = 2 - (y + j) \ (j \geq 0).$$

Fig.1

Fig.2

Fig.3

Fig.4

Fig.5

Fig.6

Fig.7

Fig.8

Fig.9

## INTERNATIONAL SEARCH REPORT

| International application No. |
|---|
| PCT/JP2021/023842 |

**A. CLASSIFICATION OF SUBJECT MATTER**
H01M  4/86(2006.01)i;   H01M  4/88(2006.01)i;   H01M  4/90(2006.01)i;   H01M  8/10(2016.01)i
FI: H01M4/90 X; H01M4/86 M; H01M8/10 101; H01M4/86 B; H01M4/88 K
According to International Patent Classification (IPC) or to both national classification and IPC

**B.  FIELDS SEARCHED**

Minimum documentation searched (classification system followed by classification symbols)
H01M4/86-4/98; H01M8/00-8/0297; H01M8/08-8/2495; B01J21/00-38/74

Documentation searched other than minimum documentation to the extent that such documents are included in the fields searched
Published examined utility model applications of Japan            1922-1996
Published unexamined utility model applications of Japan          1971-2021
Registered utility model specifications of Japan                  1996-2021
Published registered utility model applications of Japan          1994-2021

Electronic data base consulted during the international search (name of data base and, where practicable, search terms used)
JSTPlus/JMEDPlus/JST7580 (JDreamIII); Science Direct

**C.  DOCUMENTS CONSIDERED TO BE RELEVANT**

| Category* | Citation of document, with indication, where appropriate, of the relevant passages | Relevant to claim No. |
|---|---|---|
| A | JP 2000-225349 A (OTSUKA CHEMICAL CO., LTD.) 15 August 2000 (2000-08-15) entire text | 1-8 |
| A | JP 2009-208062 A (UBE-NITTO KASEI CO., LTD.) 17 September 2009 (2009-09-17) entire text, all drawings | 1-8 |
| A | JP 2019-503325 A (NATIONAL SCIENCE AND TECHNOLOGY DEVELOPMENT AGENCY) 07 February 2019 (2019-02-07) entire text, all drawings | 1-8 |
| A | JP 2014-522375 A (WISYS TECHNOLOGY FOUNDATION) 04 September 2014 (2014-09-04) entire text, all drawings | 1-8 |
| A | JP 2015-233010 A (SHOWA DENKO KABUSHIKI KAISHA) 24 December 2015 (2015-12-24) entire text, all drawings | 1-8 |

☒   Further documents are listed in the continuation of Box C.          ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 September 2021 (02.09.2021) | 14 September 2021 (14.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

Form PCT/ISA/210 (continuation of second sheet) (January 2015)

**INTERNATIONAL SEARCH REPORT**

| International application No. |
| --- |
| PCT/JP2021/023842 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2010/140612 A1 (SHOWA DENKO KABUSHIKI KAISHA) 09 December 2010 (2010-12-09) entire text, all drawings | 1-8 |
| A | WO 2018/117255 A1 (SHOWA DENKO KABUSHIKI KAISHA) 28 June 2018 (2018-06-28) entire text, all drawings | 1-8 |

**EP 4 170 759 A1**

<table>
<tr><td colspan="2"><b>INTERNATIONAL SEARCH REPORT</b><br>Information on patent family members</td><td colspan="2">International application No.<br><br>PCT/JP2021/023842</td></tr>
</table>

| Patent Documents referred in the Report | Publication Date | Patent Family | Publication Date |
|---|---|---|---|
| JP 2000-225349 A | 15 Aug. 2000 | (Family: none) | |
| JP 2009-208062 A | 17 Sep. 2009 | US 2010/0298120 A1<br>the whole document | |
| JP 2019-503325 A | 07 Feb. 2019 | WO 2017/116316 A1<br>the whole document | |
| JP 2014-522375 A | 04 Sep. 2014 | US 2014/0147398 A1<br>the whole document | |
| JP 2015-233010 A | 24 Dec. 2015 | US 2012/0315568 A1<br>the whole document | |
| WO 2010/140612 A1 | 09 Dec. 2010 | US 2012/0083407 A1<br>the whole document | |
| WO 2018/117255 A1 | 28 Jun. 2018 | US 2019/0386319 A1<br>the whole document | |

Form PCT/ISA/210 (patent family annex) (January 2015)

22

**REFERENCES CITED IN THE DESCRIPTION**

**Patent documents cited in the description**

- JP 2016219179 A